# EUROPÄISCHE PATENTSCHRIFT

(11) **EP 4 385 311 B1**
(45) Veröffentlichungstag und Bekanntmachung des Hinweises auf die Patenterteilung: **30.07.2025**
(21) Anmeldenummer: 23204235.8
(22) Anmeldetag: 18.10.2023
(51) Int. Cl.: A01F 15/04, A01F 15/08, A01D 75/18

(54) **GETRIEBEANORDNUNG FÜR EINE QUADERBALLENPRESSE**
GEAR ARRANGEMENT FOR A RECTANGULAR BALER
AGENCEMENT D'ENGRENAGE POUR UNE PRESSE À BALLES CARRÉES

(30) Priorität: 16.12.2022 DE 102022133713
(43) Veröffentlichungstag der Anmeldung: 19.06.2024
(73) Patentinhaber: Usines CLAAS France S.A.S, 57140 St. Rémy / Woippy (FR)
(72) Erfinder: Fuchs, Volker, 54439 Saarburg (DE); Schulte, Michael, 33129 Delbrück (DE)
(74) Vertreter: CLAAS Gruppe

(56) Entgegenhaltungen:
- EP-A1- 4 151 077
- EP-A1- 4 151 078
- WO-A1-2022/219030
- US-A1- 2003 167 939
- US-A1- 2014 165 859

## Beschreibung

Die vorliegende Erfindung betrifft eine Getriebeanordnung für eine Quaderballenpresse gemäß dem Oberbegriff des Anspruches 1 sowie eine Quaderballenpresse mit einem Antriebsstrang, der eine solche Getriebeanordnung umfasst, gemäß dem Oberbegriff des unabhängigen Patentanspruchs 15.

Quaderballenpressen werden in der Landwirtschaft dazu eingesetzt, um beispielsweise im Schwad abgelegtes halmartiges Erntegut wie Stroh, Heu, Gras oder dergleichen aufzunehmen, weiter zu zerkleinern und zu quaderförmigen Ballen zu verdichten bzw. zu pressen. Hierzu verfügen die Quaderballenpressen über verschiedene Arbeitsaggregate, die der erforderlichen Förderung und/oder Weiterverarbeitung des Ernteguts dienen. Derartige Arbeitsaggregate sind beispielsweise ein Schneidrotor zum Zerkleinern des aufgesammelten Ernteguts, ein Raffer zum Vorverdichten und Zuführen des vom Schneidrotor zerkleinerten Ernteguts in einen Presskanal der Quaderballenpresse, ein Presskolben, der in dem Presskanal beweglich angeordnet ist und der das in dem Presskanal befindliche und vorverdichtete Erntegut zu einem Quaderballen presst, sowie ein Knoter, der den gepressten Ballen bindet. Diese Arbeitsaggregate stehen üblicherweise mit einem zentralen Antriebsstrang der Quaderballenpresse in Antriebsverbindung, der im Betrieb der Quaderballenpresse mit einer Zapfwelle einer landwirtschaftlichen Arbeitsmaschine, insbesondere eines Traktors, verbunden ist. Zum Antreiben von Arbeitsaggregaten der Quaderballenpresse, wie dem Presskolben, ist eine Getriebeanordnung vorgesehen, welche den in dem Presskanal der Quaderballenpresse zwischen Endlagen beweglich angeordneten Presskolben sowie zumindest ein weiteres Arbeitsaggregat der Quaderballenpresse antreibt.

Derartige Quaderballenpressen umfassen herkömmlicher Weise ein sogenanntes Schwungrad, welches als Dämpfer und Energiespeicher zwischen einem die Antriebsleistung der Quaderballenpresse bereitstellenden Antriebsaggregat der landwirtschaftlichen Arbeitsmaschine und den Arbeitsaggregaten der Quaderballenpresse dient. Eine solche Quaderballenpresse ist beispielsweise aus der US 2014/165859 A1 bekannt.

Gegenwärtig wird die Entwicklung immer leistungsfähigerer und größerer Quaderballenpressen angestrebt, die ein in den Presskanal überführtes und vorverdichtetes Erntegut mit einem sehr hohen Pressdruck zu einem Quaderballen verdichten. Diese Bestrebungen führen dazu, dass immer höhere Antriebsleistungen mittels des Antriebsstrangs der Quaderballenpresse dem Presskolben zugeführt werden müssen, was wiederum dazu führt, dass immer größere und schwere Schwungräder verbaut werden müssen, um die erforderlichen Antriebsleistungen überhaupt bereitstellen und etwaige Belastungen auf den Antriebsstrang der Quaderballenpresse im Betrieb reduzieren zu können.

Die Verwendung von größeren und schweren Schwungrädern führt jedoch dazu, dass sich das Gewicht der Quaderballenpresse erhöht und bereits eine sehr hohe Antriebsleistung benötigt wird, um das Schwungrad überhaupt aus dem Stillstand beschleunigen zu können. Gegenwärtig sind solche Schwungräder auf einer Antriebswelle der Quaderballenpresse angeordnet, die oft als Kardanwelle ausgestaltet ist und mit einem Drehmomenteneingangsanschluss, an dem die Antriebsleistung des Antriebsaggregats der landwirtschaftlichen Arbeitsmaschine mittels einer Zapfwelle bereitgestellt wird, verbunden ist. Die das Schwungrad tragende Antriebswelle ist mechanisch mit den Arbeitsaggregaten der Quaderballenpresse verbunden. Bei einer Inbetriebnahme der Quaderballenpresse muss daher das Schwungrad immer gemeinsam mit einem Großteil der Antriebsstrangkomponenten und den an den Antriebsstrang angeschlossenen Arbeitsaggregaten der Quaderballenpresse aus dem Stillstand beschleunigt werden. Bei einigen landwirtschaftlichen Arbeitsmaschine führt dies dazu, dass es bei einer Inbetriebnahme der Quaderballenpresse aufgrund der hohen Massenträgheit zu einem unerwünschten Abwürgen des Antriebsaggregats der landwirtschaftlichen Arbeitsmaschine kommt und eine Inbetriebnahme der Quaderballenpresse nicht oder nur schwer möglich ist. Zudem kann es einer Beschädigung der Einschaltkupplung kommen.

Die in der WO 2014/170318 A1 beschriebene Quaderballenpresse umfasst eine auf einer Kardanwelle zwischen einem Drehmomenteneingangsanschluss und einem Schwungrad angeordnete Übertragungseinrichtung, die zwischen einem Startzustand und einem Betriebszustand schaltbar ist. Im Betriebszustand überträgt die Übertragungseinrichtung eine Drehbewegung einer Zapfwelle einer landwirtschaftlichen Arbeitsmaschine vollständig auf ein Schwungrad, so dass die Übertragung vergleichbar mit einer herkömmlichen Achse ist. Im Startzustand überträgt die Übertragungseinrichtung die Drehbewegung der Zapfwelle hingegen nur teilweise auf das Schwungrad. Dadurch kann die Zapfwelle eine höhere Drehzahl als das Schwungrad haben. Die Übertragungseinrichtung ist als Planetengetriebe oder als Reibkupplung ausgebildet. Aufgrund der Übertragungseinrichtung kann ein Schwungrad in der Quaderballenpresse eingesetzt werden, das an und für sich zu schwer und/oder zu groß ist, um über eine direkte Verbindung in Betrieb genommen zu werden.

Im laufenden Betrieb einer Quaderballenpresse kann es zu einer Überlastsituation kommen, welche das Abbremsen der Arbeitsaggregate erforderlich werden lässt, um stärkere Beschädigungen der Quaderballenpresse, insbesondere der verschiedenen Arbeitsaggregate, und/oder der die Quaderballenpresse schleppenden und antreibenden Arbeitsmaschine zu verhindern. Insbesondere um Verletzungen einer Bedienperson sowie das Auftreten von Beschädigungen zu verhindern, ist es erforderlich, das Abbremsen der Arbeitsaggregate innerhalb eines Zeitraumes unterhalb einer Sekunde zu erreichen. Mit einer zunehmenden Größe des Schwungrades, wie sie im Stand der Technik vorgesehen ist, geht eine Zunahme der bewegten Masse einher, die abzubremsen ist.

Ausgehend von dem vorstehend genannten Stand der Technik ist es demnach die Aufgabe der vorliegenden Erfindung, eine Getriebeanordnung zum Antreiben eines in einem Presskanal einer Quaderballenpresse zwischen Endlagen beweglich angeordneten Presskolbens sowie zumindest eines weiteren Arbeitsaggregat anzugeben, welche die die an den Antriebsaggregaten der Quaderballenpresse erforderlichen Antriebsleistung, insbesondere die Antriebsleistung des Presskolbens, zuverlässig bereitstellt sowie den erhöhten Anforderungen an die Betriebssicherheit einer Quaderballenpresse Rechnung trägt.

Diese Aufgabe wird erfindungsgemäß durch die Merkmale des unabhängigen Patentanspruchs 1 gelöst, wobei vorteilhafte Weiterbildungen der erfindungsgemäßen Getriebeanordnung sind Gegenstand der entsprechenden abhängigen Patentansprüche 2 bis 14 sind.

Gemäß dem Anspruch 1 wird eine Getriebeanordnung für eine Quaderballenpresse vorgeschlagen, welche dazu eingerichtet ist, einen in einem Presskanal der Quaderballenpresse zwischen Endlagen beweglich angeordneten Presskolben sowie zumindest ein weiteres Arbeitsaggregat der Quaderballenpresse anzutreiben. Erfindungsgemäß ist vorgesehen, dass die Getriebeanordnung zwei Seitengetriebe und zumindest ein dem jeweiligen Seitengetriebe nachgeschaltetes Untersetzungsgetriebe umfasst, welche abtriebsseitig mit einer Kurbelwelle, auf der der Presskolben gelagert ist, verbindbar sind, wobei dem jeweiligen Seitengetriebe und dem diesen nachgeschalteten Untersetzungsgetriebe zumindest ein Schwungrad zwischengeschaltet ist, wobei zumindest eines der Untersetzungsgetriebe eine schaltbare Überlastkupplung umfasst, welche dazu ausgebildet ist, beim Auftreten einer mechanischen Überlast die den Schwungrädern nachgeschalteten Untersetzungsgetriebe bis zum Stillstand abzubremsen.

Die erfindungsgemäße Getriebeanordnung umfasst mithin zwei Seitengetriebe, zwei Untersetzungsgetriebe und zumindest zwei Schwungräder, wobei jeweils ein Untersetzungsgetriebe jeweils einem Seitengetriebe nachgeschaltet ist und jeweils zumindest ein Schwungrad jeweils einem Seitengetriebe und jeweils einem Untersetzungsgetriebe zwischengeschaltet ist, wobei jedes Untersetzungsgetriebe abtriebsseitig mit der Kurbelwelle verbindbar ist. Zumindest eines der Untersetzungsgetriebe umfasst die schaltbare Überlastkupplung.

Durch die Anordnung einer schaltbaren Überlastkupplung in zumindest einem der Untersetzungsgetriebe ist es möglich, alle Arbeitsaggregate der Quaderballenpresse gleichzeitig abzubremsen. Hierdurch lassen sich Beschädigungen der Arbeitsaggregate und/oder des Antriebsstranges einer die Quaderballenpresse antreibenden landwirtschaftlichen Arbeitsmaschine vermeiden.

Gemäß einer vorteilhaften Weiterbildung der Erfindung ist vorgesehen, dass zwischen dem jeweiligen Schwungrad und dem diesem nachgeschalten Untersetzungsgetriebe zumindest eine schaltbare Kupplungseinrichtung zwischengeschaltet ist, welche beim Abbremsen eine geöffnete Schaltstellung einnimmt.

Durch die Anordnung zumindest eines Schwungrads zwischen dem jeweiligen Seitengetriebe und dem zumindest einen Untersetzungsgetriebe in Kombination mit der dem zumindest einen Schwungrad nachgeschalteten und dem Untersetzungsgetriebe vorgeschalteten schaltbaren Kupplungseinrichtung ist es möglich, das Schwungrad bei einer Inbetriebnahme der Quaderballenpresse zunächst aus dem Stillstand zu beschleunigen und erst anschließend den Presskolben und die dem Presskolben zugeordneten Untersetzungsgetriebe zuzuschalten. Hierdurch wird eine auf das Antriebsaggregat der landwirtschaftlichen Arbeitsmaschine durch die Trägheit der Antriebsstrangkomponenten wirkende Last in erheblichem Maße reduziert, da lediglich das zumindest eine Schwungrad und die diesem vorgeschalteten Antriebsstrangkomponenten aus dem Stillstand beschleunigt werden müssen, der Presskolben sowie die ihm zugeordneten Untersetzungsgetriebe jedoch noch nicht angetrieben werden müssen.

Das insbesondere gleichzeitige Öffnen der schaltbaren Kupplungseinrichtung zwischen den Untersetzungsgetrieben und den Schwungrädern gewährleistet, dass der Teil der Getriebeanordnung, der von der Zapfwelle der landwirtschaftlichen Arbeitsmaschine angetrieben wird und die beiden Seitengetriebe und die Schwungräder umfasst, nicht mit abgebremst wird.

Bevorzugt kann die zumindest eine schaltbare Kupplungseinrichtung unmittelbar zwischen dem Schwungrad und einem Getriebeeingang des dem zumindest einen Schwungrad nachgeschalten Untersetzungsgetriebes angeordnet sein. Hierdurch wird ein kurzer Weg zur Leistungsübertragung an den Presskolben geschaffen, da zwischen Presskolben und den zumindest zwei Schwungrädern lediglich die zumindest eine schaltbare Kupplungseinrichtung und das jeweilige Untersetzungsgetriebe angeordnet sind. Die unter Zuhilfenahme der Schwungräder erzeugte Antriebsleistung wird nahezu verlustfrei und sehr direkt an die Untersetzungsgetriebe übertragen, welche die Antriebsleistung derart wandeln, dass ein für den Betrieb des Presskolbens erforderliches hohes Drehmoment bei geringer Drehzahl erzielt wird.

Insbesondere kann die zumindest eine schaltbare Kupplungseinrichtung eine hydraulisch betätigbare Kupplungseinrichtung, vorzugsweise eine hydraulisch betätigbare Lamellenkupplung, sein. Hierdurch kann einerseits sichergestellt werden, dass ein ausreichend hoher Anpressdruck in der zumindest einen schaltbaren Kupplungseinrichtung erzeugt wird, so dass die Antriebsleistung zuverlässig an die den Schwungrädern nachgeordneten Untersetzungsgetriebe übertragen werden kann, ohne hierbei große Verluste zu erzeugen. Durch die hydraulische Betätigung kann andererseits eine variable Ansteuerung der schaltbaren Kupplungseinrichtungen erzielt werden, so dass diese beispielsweise während des Schaltvorgangs zum Koppeln des Presskolbens zunächst eine gewisse Zeit schlupfend betrieben werden können.

Gemäß einer weiteren vorteilhaften Weiterbildung der Erfindung ist vorgesehen, dass der Getriebeanordnung eine Steuerungsvorrichtung zugeordnet ist, welche zur Ansteuerung der Überlastkupplung und/oder der Kupplungseinrichtungen eingerichtet ist.

Dabei kann die Steuerungsvorrichtung dazu eingerichtet sein, bei einer Inbetriebnahme der Quaderballenpresse die schaltbaren Kupplungseinrichtungen anzusteuern, um diese in einen geöffneten Zustand zu überführen, in dem das zumindest eine Schwungrad und das diesem nachgeordnete Untersetzungsgetriebe voneinander entkoppelt sind, und sobald das zumindest eine Schwungrad eine Nenndrehzahl oder eine Drehzahl, die unterhalb der Nenndrehzahl liegt, vorzugsweise eine Drehzahl, die bis zu 70 % unterhalb der Nenndrehzahl liegt, erreicht hat, die schaltbaren Kupplungseinrichtungen in einen geschlossenen Zustand zu überführen, in dem das zumindest eine Schwungrad und das diesem nachgeordnete Untersetzungsgetriebe miteinander wirkverbunden sind, vorliegt.

Gemäß einem weiteren Aspekt kann die Steuerungsvorrichtung dazu eingerichtet sein, beim Auftreten einer mechanischen Überlast die zumindest eine Überlastkupplung und die schaltbaren Kupplungseinrichtungen gleichzeitig anzusteuern, um die Arbeitsaggregate abzubremsen und zugleich durch das Öffnen der schaltbaren Kupplungseinrichtungen die Schwungräder von den diesen nachgeordneten Untersetzungsgetrieben zu entkoppeln.

Gemäß einer bevorzugten Weiterbildung können der Getriebeanordnung und/oder den Arbeitsaggregaten Sensoren zur Detektion einer mechanischen Überlast zugeordnet sein. Die Sensoren können Signale an die Steuerungsvorrichtung zu deren Auswertung übertragen. Die Steuerungsvorrichtung ist dazu eingerichtet, anhand der Auswertung der von den Sensoren bereitgestellten Signale das Auftreten einer mechanischen Überlastung zu detektieren, um die zumindest eine Überlastkupplung und/oder die Kupplungseinrichtungen entsprechend anzusteuern.

Alternativ oder zusätzlich kann die Getriebeanordnung stiftförmige Scherelemente zur Detektion einer mechanischen Überlast aufweisen. Das Abscheren der Scherelemente bei einem Auftreten einer mechanischen Überlastung bewirkt eine Ansteuerung bzw. ein Schalten der Überlastkupplung, um die den Schwungrädern nachgeschalteten Untersetzungsgetriebe bis zum Stillstand abzubremsen.

Bevorzugt kann die Überlastkupplung eine hydraulisch betätigbare Kupplungseinrichtung sein, vorzugsweise eine hydraulisch betätigbare Lamellenkupplung.

Dabei kann die Überlastkupplung ein Lamellenpaket und einen hydraulisch druckbeaufschlagbaren Kolben, in welchem zumindest ein Federelement angeordnet ist, umfassen, wobei der Kolben durch die hydraulische Druckbeaufschlagung entgegen der Federkraft des zumindest einen Federelementes in einer zum Lamellenpaket beabstandeten Position gehalten wird, in welche die Überlastkupplung geöffnet ist, und bei Detektion einer Überlast die Überlastkupplung drucklos geschaltet wird, in welcher die Überlastkupplung geschlossen ist. Bei Drucklosschaltung der Überlastkupplung kann mittels des zumindest einen Federelementes der Kolben mit einer vordefinierten Federkraft gegen das Lamellenpaket gepresst werden, um die Untersetzungsgetriebe und somit die von diesen angetriebenen Arbeitsaggregate abzubremsen.

Gemäß einer bevorzugten Weiterbildung kann die Steuerungsvorrichtung dazu eingerichtet sein, nach einer Detektion des Stillstands der Übersetzungsgetriebe die zwischengeschalteten schaltbaren Kupplungseinrichtungen anzusteuern, um diese durch progressives Schließen aus der für das Abbremsen geöffneten Schaltstellung in ihre geschlossene Schaltstellung zu überführen. Die Detektion des Stillstands der Übersetzungsgetriebe kann durch eine geeignete Sensorik erfolgen, welche beispielsweise die Drehzahl der Kurbelwelle überwacht. Unter dem Begriff progressives Schließen ist das Schließen der Kupplungseinrichtungen unter Verwendung einer linear oder progressiv ansteigenden Kennlinie zu verstehen. Das progressive Schließen der zwischen das zumindest eine Schwungrad und das jeweilige Übersetzungsgetriebe geschalteten Kupplungseinrichtungen ermöglicht es, die Schwungräder sowie diesen vorgeschaltete Antriebskomponenten abzubremsen. Dies setzt voraus, dass die Arbeitsmaschine die Quaderballenpresse nicht mehr aktiv antreibt. Das Abbremsen der Schwungräder ist aus Gründen der Betriebssicherheit erforderlich, da die Schwungräder aufgrund ihrer Massenträgheit über den Zeitpunkt des Stillstands der Übersetzungsgetriebe hinaus weiterrotieren.

Gemäß einer vorteilhaften Weiterbildung der Erfindung ist vorgesehen, dass auf einem Abtrieb des jeweiligen Seitengetriebes zwei Schwungräder hintereinander angeordnet sind, wobei eine weitere Kupplungseinrichtung zwischen den beiden Schwungräder angeordnet ist. Hierdurch können anstelle eines großen Schwungrades zwei kleinere Schwungräder zum Einsatz kommen, die gestuft zuschaltbar sind. Dies kann sich vorteilhaft auf das Erfordernis der von der landwirtschaftlichen Arbeitsmaschine bereitzustellenden Antriebsleistung auswirken. Dabei können die beiden dem jeweiligen Seitengetriebe zugeordneten Schwungräder gleich dimensioniert sein oder voneinander abweichend.

Insbesondere können die beiden Seitengetriebe als Zugmittelgetriebe, vorzugsweise als Keilriemengetriebe oder Kettengetriebe, oder als mehrstufiges Stirnradgetriebe, Kegelradstufe oder Kronenradgetriebe ausgeführt sein. Die Ausgestaltung der beiden Seitengetriebe als Zugmittelgetriebe ermöglicht es, in den dem Presskolben zugeordneten Untersetzungsgetrieben während des Betriebs der Quaderballenpresse durch eine mittels des Presskolbens im Betrieb erzeugte Last wirkende Verwindung (Torsion) auszugleichen bzw. eine solche Verwindung nicht auf andere Baugruppen der Getriebeanordnung oder eines Antriebsstrangs der Quaderballenpresse zu übertragen, da dies zu einer Beschädigung oder Zerstörung der Baugruppen führen könnte.

Insbesondere können die Untersetzungsgetriebe als Planetengetriebe oder als mehrstufige Stirnradgetriebe ausgeführt sein. Vorzugsweise sind die beiden Untersetzungsgetriebe als zweistufige Planetengetriebe ausgebildet, wobei die zweistufigen Planetengetriebe in jeder der zwei Getriebestufen zum Antrieb über ein Sonnenrad und zum Abtrieb über einen Steg, an dem Planetenräder gelagert sind, ausgebildet sind, wobei ein Steg der zweiten Stufe des jeweiligen Planetengetriebes mit der Kurbelwelle verbindbar ist. Die Verwendung der zweistufigen Planetengetriebe als Untersetzungsgetriebe sorgt einerseits für die zuvor beschriebene Wandlung der Antriebsleistung auf die für den Betrieb des Presskolbens erforderliche Antriebsleistung. Gleichzeitig zeichnen sich die Planetengetriebe durch einen sehr kompakten Bauraum aus und sorgen für ein reduziertes Gewicht im Vergleich zu anderen Getriebetypen, die für eine derartige Untersetzung der Antriebsleistung geeignet wären.

Gemäß einer weiteren vorteilhaften Weiterbildung der Erfindung ist vorgesehen, dass jedes der Untersetzungsgetriebe mit einer schaltbaren Überlastkupplung ausgeführt ist. Hierdurch wird eine Getriebeanordnung erzeugt, die insbesondere für hohe Leistungen am Presskolben geeignet ist. Durch die Verwendung von jeweils zwei Baugruppen kann ein symmetrisches Abbremsen der Untersetzungsgetriebe und somit der den Presskolben tragenden Kurbelwelle erzielt werden, wobei jede Seite der Getriebeanordnung eine reduzierte Belastung erfährt. Ein weiterer Vorteil besteht darin, dass die Verwendung baugleicher Übersetzungsgetriebe einen Kostenvorteil darstellt.

Die erfindungsgemäße Aufgabe wird ferner durch eine Quaderballenpresse mit einem Antriebsstrang, der eine solche Getriebeanordnung umfasst, gemäß dem unabhängigen Patentanspruch 15 gelöst. Auf die erfindungsgemäßen Vorteile der Getriebeanordnung darf verwiesen werden.

Die vorliegende Erfindung wird nachstehend anhand eines in den Zeichnungen dargestellten Ausführungsbeispieles näher erläutert.

Es zeigen:
- Fig. 1: schematisch und exemplarisch eine Darstellung einer Quaderballenpresse in Seitenansicht;
- Fig. 2: schematisch und exemplarisch eine Darstellung einer Getriebeanordnung der Quaderballenpresse gemäß Fig. 1;
- Fig. 3: schematisch und exemplarisch eine Teilschnittansicht einer Ausführungsform der erfindungsgemäßen Getriebeanordnung; und
- Fig. 4: eine Detailansicht eines der Untersetzungsgetriebe gemäß Fig. 3.

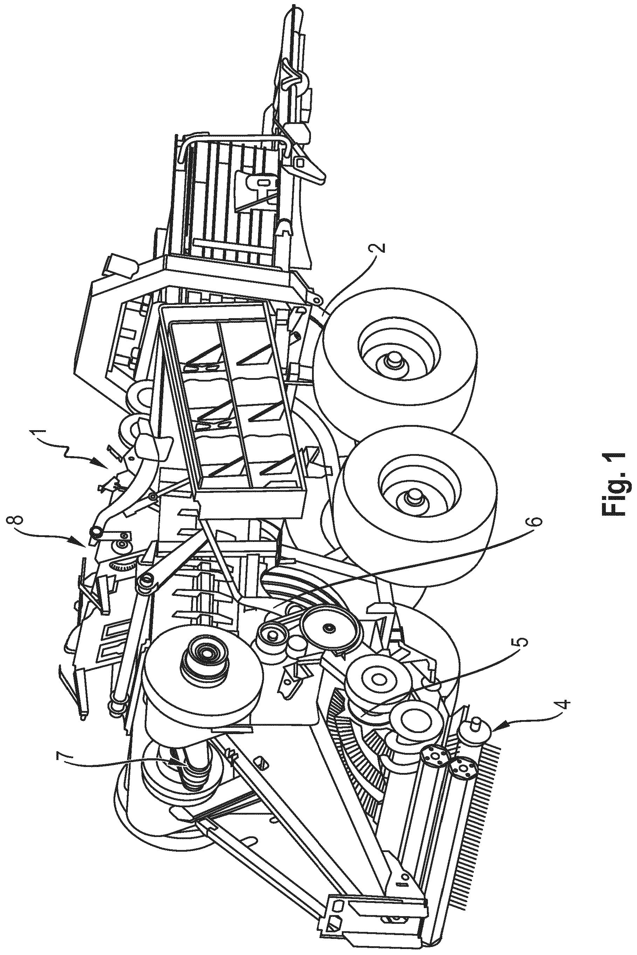

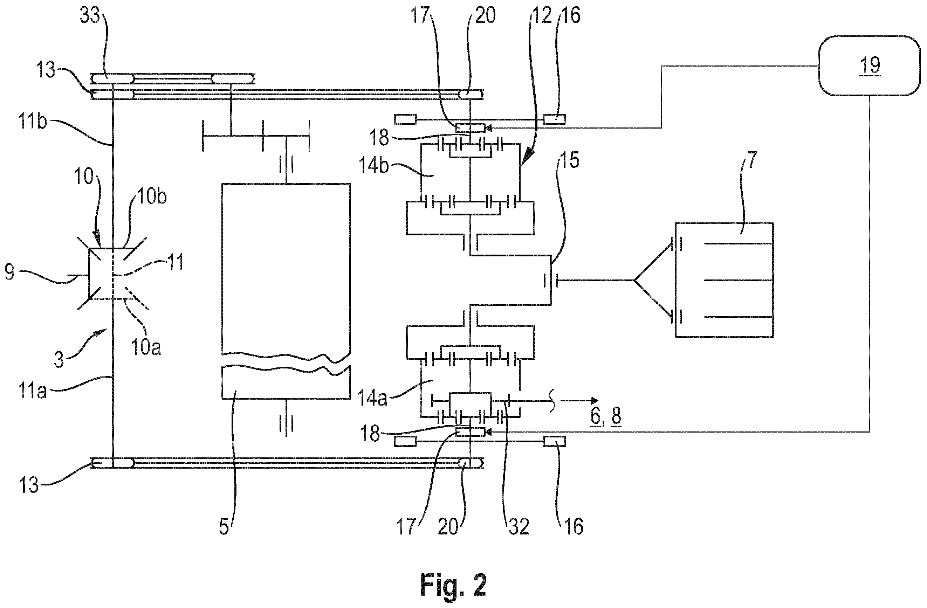

Fig. 1 zeigt schematisch und exemplarisch eine Darstellung einer Quaderballenpresse 1 in Seitenansicht. Die Quaderballenpresse 1 ist mit einer in den Figuren nicht dargestellten landwirtschaftlichen Arbeitsmaschine, insbesondere einem Traktor, koppelbar, so dass die Quaderballenpresse 1 und die landwirtschaftliche Arbeitsmaschine gemeinsam einen sogenannten landwirtschaftlichen Zug ausbilden. Die Quaderballenpresse 1 umfasst ein in Fig. 1 nicht dargestelltes Gehäuse, welches die an einem Fahrgestell 2 der Quaderballenpresse 1 befestigte Komponenten der Quaderballenpresse 1 umhüllend umgibt. Die Quaderballenpresse 1 umfasst ferner einen in Fig. 2 näher dargestellten Antriebsstrang 3, mittels dem diverse Arbeitsaggregate der Quaderballenpresse 1 angetrieben werden. Derartige Arbeitsaggregate sind beispielsweise eine als Pick-Up bekannte Aufnahmevorrichtung 4 zur Aufnahme von im Schwad auf einer landwirtschaftlichen Fläche abgelegten Ernteguts, ein Schneidrotor 5 zum Zerkleinern des aufgenommenen Ernteguts, ein Raffer 6 zum Vorverdichten des zerkleinerten Ernteguts und Zuführen desselben in einen Presskanal der Quaderballenpresse 1, ein in dem Presskanal der Quaderballenpresse 1 zwischen Endlagen beweglich angeordneten Presskolben 7 zum Pressen des vorverdichteten Ernteguts in einen Quaderballen, sowie ein Knoter 8 zum Binden des gepressten Quaderballens. Ein weiteres Arbeitsaggregat bilden eine Nadel und deren Nadelantrieb, die mit dem Knoter 8 zusammenwirken.

Der Antriebsstrang 3 der Quaderballenpresse 1 wird mittels der landwirtschaftlichen Arbeitsmaschine mit einer Antriebsleistung versorgt. Hierzu weist die landwirtschaftliche Arbeitsmaschine heckseitig einen an sich bekannten Zapfwellenabtrieb auf. Der Antriebsstrang 3 der Quaderballenpresse 1 umfasst eine Antriebswelle 9, die wiederum einen Drehmomenteneingangsanschluss des Antriebsstrangs 3 umfasst, mittels dem der Antriebsstrang 3 der Quaderballenpresse 1 mit dem Zapfwellenabtrieb der landwirtschaftlichen Arbeitsmaschine verbindbar ist.

An die Antriebswelle 9 des Antriebsstrangs 3 schließt sich eine erste Leistungsverzweigung 10 an, die als Kegelradstufe ausgebildet ist. Ein Kegelrad der als Kegelradstufe ausgebildeten ersten Leistungsverzweigung umfasst eine durchgehende Abtriebswelle 11, die sich quer zur Antriebswelle 9, d.h. quer zur Haupterstreckungsrichtung der Quaderballenpresse 1, erstreckt, an der das andere Kegelrad der Kegelradstufe angeschlossen ist. Denkbar ist auch, dass die Abtriebswelle 11 zweiteilig ausgeführt ist, sodass eine erste und eine zweite Abtriebswelle 11a, 11b von einem auf diesen angeordneten Kegelrad 10a, 10b an die als Kegelradstufe ausgebildete Leistungsverzweigung 10 angeschlossen sind. Zur Veranschaulichung sind das zusätzliche Kegelrad 10a und die Ausführung der Abtriebswelle 11 als eine durchgehende Welle strichliniert dargestellt.

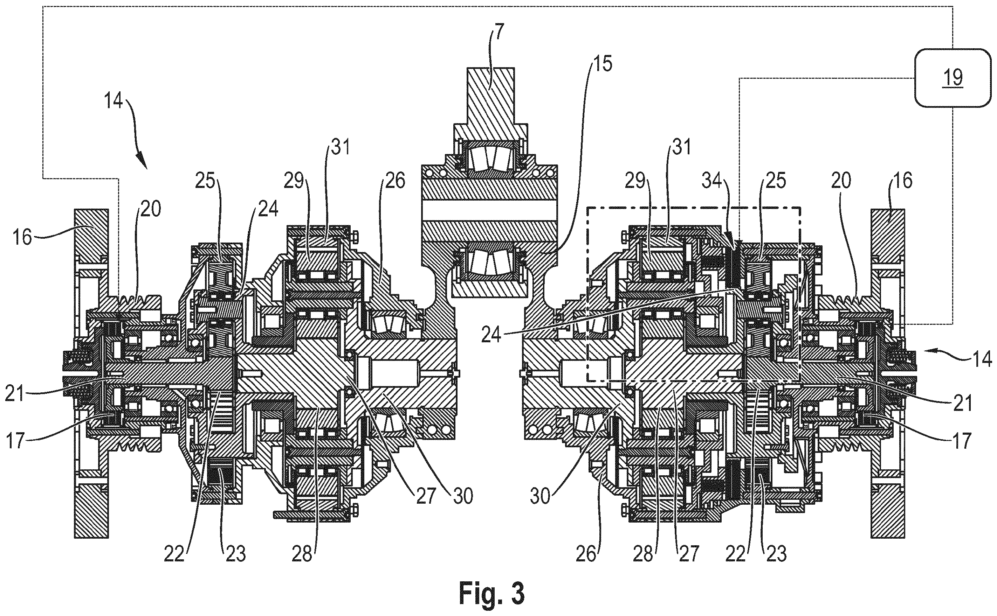

Die Quaderballenpresse 1 bzw. der Antriebsstrang 3 der Quaderballenpresse 1 umfasst neben den zuvor genannten Antriebsstrangkomponenten eine Getriebeanordnung 12. Wie in den Fig. 2 und 3 dargestellt, umfasst die Getriebeanordnung 12 zwei Seitengetriebe 13, die mittelbar von einer Zapfwelle 5 der landwirtschaftlichen Arbeitsmaschine antreibbar sind. Mittelbar bedeutet in diesem Zusammenhang, dass die beiden Seitengetriebe 13 an die Leistungsverzweigung 10 angeschlossen sein können. Die zwei Seitengetriebe 13 sind einander gegenüberliegend angeordnet.

Wie insbesondere in Fig. 2 dargestellt, kann ein jeweiliger Antrieb der Seitengetriebe 13 auf der durchgehenden Abtriebswelle 11 respektive der ersten oder zweiten Abtriebswellen 11, 11a der Leistungsverzweigung 10 angeordnet sein. Eine mittels der Leistungsverzweigung 10 den beiden Seitengetriebe 13 bereitgestellte Antriebsleistung kann mittels der zwei Seitengetriebe 13 gewandelt werden; sie kann jedoch auch ohne Wandlung übertragen werden.

Die beiden Seitengetriebe 13 sind vorzugsweise als Zugmittelgetriebe, besonders bevorzugt als Keilriemengetriebe, ausgebildet, was vorteilhaft im Hinblick auf den Aufbau der Getriebeanordnung 12 anzusehen ist. Die beiden Seitengetriebe 13 können jedoch ebenfalls als ein anderes Zugmittelgetriebe, beispielsweise als ein Kettengetriebe, oder als eine Kegelradstufe, ein Kronenradgetriebe oder ein mehrstufiges Stirnradgetriebe ausgebildet sein. Die Verwendung eines Zugmittelgetriebes als Seitengetriebe 13 erlaubt es besonders unkompliziert eine räumliche Distanz zwischen der Leistungsverzweigung 10 und dem Presskolben 7 zu überbrücken.

Den beiden Seitengetrieben 13 ist jeweils zumindest ein Untersetzungsgetriebe 14a, 14b nachgeschaltet, das dazu eingerichtet ist, die mittels des jeweiligen Seitengetriebes 13 bereitgestellte Antriebsleistung auf eine für den Betrieb des Presskolbens 7 erforderliche Antriebsleistung zu wandeln. Das dem jeweiligen Seitengetriebe 13 nachgeschaltete Untersetzungsgetriebe 14a, 14b ist abtriebsseitig mit einer Kurbelwelle 15 verbindbar bzw. verbunden, auf der der Presskolben 7 gelagert ist.

Dem zumindest einen Untersetzungsgetriebe 14a, 14b und dem jeweiligen Seitengetriebe 13 ist zumindest ein Schwungrad 16 zwischengeschaltet. Bevorzugt kann dem zumindest einen Schwungrad 16 und dem zumindest einen Untersetzungsgetriebe 14a, 14b wiederum zumindest eine schaltbare Kupplungseinrichtung 17 zwischengeschaltet sein. Vorzugsweise ist die zumindest eine schaltbare Kupplungseinrichtung 17 unmittelbar zwischen dem zumindest einen Schwungrad 16 und einem Getriebeeingang 18 des zumindest einen Untersetzungsgetriebes 14a, 14b angeordnet.

Die Betätigung der zumindest zwei schaltbaren Kupplungseinrichtungen 17 ist mittels einer der Getriebeanordnung 12 zugeordneten Steuerungsvorrichtung 19 steuerbar. Die Steuerungsvorrichtung 19 kann der Quaderballenpresse 1 selbst oder aber der landwirtschaftlichen Arbeitsmaschine zugeordnet sein. Insbesondere kann die Steuerungsvorrichtung 19 die Betätigung der zumindest zwei schaltbaren Kupplungseinrichtungen 17 derart steuern, dass bei einer Inbetriebnahme der Quaderballenpresse 1 die beiden Kupplungseinrichtungen 17 in einem geöffneten Zustand vorliegen. Ein geöffneter Zustand der Kupplungseinrichtungen 17 ist ein Zustand, in dem das jeweilige Schwungrad 16 von dem diesem nachgeordneten Untersetzungsgetriebe 14a, 14b entkoppelt ist und somit keine Antriebsleistung von dem zumindest einen Schwungrad 16 bzw. dem das zumindest eine Schwungrad 16 tragenden Bauteil, vorzugsweise dem zumindest einen Seitengetriebe 13, an den Getriebeeingang 18 des jeweiligen Untersetzungsgetriebes 14a, 14b übertragen werden kann. In diesem Schaltzustand der zumindest zwei schaltbaren Kupplungseinrichtungen 17 werden die zumindest zwei Schwungräder 16 mittels der durch die beiden Seitengetriebe 13 bereitgestellten Antriebsleistung aus dem Stillstand beschleunigt. Sobald die Schwungräder 16 ihre Nenndrehzahl oder eine Drehzahl, die unterhalb der Nenndrehzahl liegt, vorzugsweise eine Drehzahl, die bis zu 70 % unterhalb der Nenndrehzahl liegt (der Wert 70 % unterhalb der Nenndrehzahl ist in diesem Bereich miteingeschlossen), erreicht haben, steuert die Steuerungsvorrichtung 19 die Betätigung der schaltbaren Kupplungseinrichtungen 17 derart, dass die schaltbaren Kupplungseinrichtungen 17 in einen geschlossenen Zustand überführt werden. Ein geschlossener Zustand ist ein Zustand, in dem das jeweilige Schwungrad 16 mit dem diesem nachgeordneten Untersetzungsgetriebe 14a, 14b gekoppelt ist und somit eine Antriebsleistung von dem Schwungrad 16 bzw. dem das Schwungrad 16 tragenden Bauteil, vorzugsweise dem jeweiligen Seitengetriebe 13, an den Getriebeeingang 18 des zumindest einen Untersetzungsgetriebes 14a, 14b übertragen werden kann.

Gemäß einer Ausführungsform der erfindungsgemäßen Getriebeanordnung 12 ist die zumindest eine schaltbare Kupplungseinrichtung 17 als hydraulisch betätigbare bzw. schaltbare Kupplungseinrichtung 17 ausgebildet, insbesondere als hydraulisch betätigbare bzw. schaltbare Lamellenkupplung. In diesem Zusammenhang ist es vorstellbar, dass die Steuerungsvorrichtung 19 Schaltsignale für die Komponenten eines mit der zumindest einen hydraulisch betätigbaren bzw. schaltbaren Kupplungseinrichtung 17 verbundenen Hydraulikkreislaufs, beispielsweise einer Hydraulikpumpe, eines Schaltventils, etc., erzeugt, so dass ein Volumenstrom zum Betätigen der hydraulisch betätigbaren bzw. schaltbaren Kupplungseinrichtungen 17 mittels der Steuerungssignale an die Komponenten variabel einstellbar ist.

Grundsätzlich ist es auch vorstellbar, dass die Betätigung der zumindest zwei schaltbaren Kupplungseinrichtungen 17 auch manuell durch eine Bedienperson erfolgen kann, beispielsweise über die Betätigung eines Fußpedals in einer Fahrgastzelle der landwirtschaftlichen Arbeitsmaschine.

Gemäß einer Ausführungsform der Getriebeanordnung 12 kann das zumindest eine Schwungrad 16 als Komponente eines Abtriebs 20 des zugehörigen Seitengetriebes 13 ausgebildet sein. Das zumindest eine Schwungrad 16 kann gemäß einer Ausführungsform integral mit dem Abtrieb 20 des zugehörigen Seitengetriebes 13 ausgebildet sein, so dass der Abtrieb 20 und das Schwungrad 16 ein kohärentes Bauteil ausbilden. Alternativ hierzu kann das zumindest eine Schwungrad 16 kraft-, form- und/oder stoffschlüssig mit dem Abtrieb 20 des zugehörigen Seitengetriebes 13 verbunden sein, dem das zumindest eine Schwungrad 16 nachgeordnet ist.

Die erfindungsgemäße Getriebeanordnung 12 kann ferner eine Leistungsverzweigung 32 umfassen, die dem zumindest einen Untersetzungsgetriebe 14a, 14b zugeordnet ist. Die Leistungsverzweigung 32 umfasst vorzugsweise ein mehrstufiges Stirnradgetriebe. Hierdurch ist es möglich parallel zum Presskolben 7 weitere Arbeitsaggregate, wie beispielsweise den Raffer 6 und/oder den Knoter 8, anzutreiben. Sofern das zumindest eine Untersetzungsgetriebe 14a, 14b als zweistufiges Planetengetriebe ausgebildet ist, ist die Leistungsverzweigung 32, insbesondere ein Zahnrad der als Stirnradgetriebe ausgeführten Leistungsverzweigung 32, mit einem ersten Steg 24 einer ersten Getriebestufe des Untersetzungsgetriebes 14a wirkverbunden.

Der Antriebsstrang 3 der Quaderballenpresse 1 kann ferner ausgehend von der Leistungsverzweigung 10 bzw. der Abtriebswelle 11, 11a der Leistungsverzweigung 10 dazu eingerichtet sein, zumindest ein weiteres Arbeitsaggregat, beispielsweise eine Aufnahmevorrichtung 4 und/oder einen Schneidrotor 5, anzutreiben. Hierzu kann der Leistungsverzweigung 10 bzw. der Abtriebswelle 11, 11a der Leistungsverzweigung 10 zumindest ein weiteres Seitengetriebe 33 oder zumindest ein Winkelgetriebe nachgeschaltet sein, das die Antriebsleistung unmittelbar oder mittelbar, beispielsweise über ein oder mehrere Getriebe, an die weiteren Arbeitsaggregate 4, 5 der Quaderballenpresse 1 überträgt.

Die Darstellung in Fig. 3 zeigt schematisch und exemplarisch eine Teilschnittansicht einer Ausführungsform der erfindungsgemäßen Getriebeanordnung 12. Wie aus den Darstellungen der Fig. 2 und 3 ersichtlich, sind die beiden Untersetzungsgetriebe 14a, 14b vorzugsweise als mehrstufige Untersetzungsgetriebe 14a, 14b ausgebildet. Die beiden Untersetzungsgetriebe 14a, 14b sind, bezogen auf die Kurbelwelle 15, spiegelbildlich angeordnet.

Gemäß einer bevorzugten Ausführungsform, die in Fig. 3 abgebildet ist, sind die beiden Untersetzungsgetriebe 14a, 14b als Planetengetriebe ausgebildet. Beide Untersetzungsgetriebe 14a, 14b weisen den gleichen Getriebeaufbau auf.

Vorzugsweise sind die Untersetzungsgetriebe 14a, 14b als zweistufige Planetengetriebe ausgebildet, die jeweils eingangsseitig mittels der zumindest einen schaltbaren Kupplungseinrichtung 17 mit dem zumindest einen Schwungrad 16 bzw. den das zumindest eine Schwungrad 16 umfassenden Abtrieb 20 des jeweiligen Seitengetriebes 13 derart verbindbar bzw. verbunden sind, dass den Untersetzungsgetrieben 14a, 14b eine Antriebsleistung zugeführt werden kann bzw. wird. Ausgangsseitig sind die einander gegenüberliegend angeordneten Untersetzungsgetriebe 14a, 14b mit der Kurbelwelle 15 verbindbar bzw. verbunden. Der Getriebeeingang der Untersetzungsgetriebe 14a, 14b umfasst eine erste Getriebewelle 21, auf der ein erstes Sonnenrad 22 befestigt ist. Das erste Sonnenrad 22 kämmt mit einer Vielzahl von ersten Planetenrädern 23, vorzugsweise vier ersten Planetenrädern 23, die gemeinsam drehbeweglich an einem ersten Steg 24 gelagert sind. Die ersten Planetenräder 23 wiederum kämmen mit einem ersten Hohlrad 25, das starr mit einem Getriebegehäuse 26 verbunden ist, das wiederum mit dem Fahrgestell 2 der Quaderballen 1 oder einem anderen Bauteil der Quaderballenpresse 1 verbunden ist, so dass sich das Getriebegehäuse 26 beim Betrieb der Quaderballenpresse 1 lediglich zusammen mit der Quaderballenpresse 1 bewegt, jedoch nicht relativ zur Quaderballenpresse 1.

Die Antriebsleistung wird somit im geschlossenen Zustand der schaltbaren Kupplungseinrichtung 17 des jeweiligen Untersetzungsgetriebes 14a, 14b dem ersten Sonnenrad 22 über die erste Getriebewelle 21 zugeführt und an die ersten Planetenräder 23 übertragen, die das erste Hohlrad 25 ablaufen und eine Drehbewegung auf den ersten Steg 24 übertragen. Der Abtrieb erfolgt somit in der ersten Getriebestufe des als zweistufiges Planetengetriebe ausgeführten Untersetzungsgetriebes 14a, 14b über den ersten Steg 24. Der erste Steg 24 der ersten Getriebestufe ist mit einer zweiten Getriebewelle 27 derart verbunden, dass die Antriebsleistung in einem geschlossenen Zustand der schaltbaren Kupplungseinrichtung 17 vom ersten Steg 24 auf die zweite Getriebewelle 27 übertragen wird. Auf der zweiten Getriebewelle 27 ist ein zweites Sonnenrad 28 befestigt.

Das zweite Sonnenrad 28 kämmt mit einer Vielzahl von zweiten Planetenrädern 29, vorzugsweise vier zweiten Planetenrädern 29, die gemeinsam drehbeweglich an einem zweiten Steg 30 gelagert sind. Die zweiten Planetenräder 29 wiederum kämmen mit einem zweiten Hohlrad 31, das starr mit dem Getriebegehäuse 26 verbunden ist. Die Antriebsleistung wird somit in dem geschlossenen Zustand der schaltbaren Kupplungseinrichtung 17 ausgehend von der ersten Getriebestufe dem zweiten Sonnenrad 28 über die zweite Getriebewelle 27 zugeführt und an die zweiten Planetenräder 29 übertragen, die das zweite Hohlrad 31 ablaufen und eine Drehbewegung auf den zweiten Steg 30 übertragen. Der Abtrieb erfolgt somit in der zweiten Getriebestufe des jeweiligen Untersetzungsgetriebes 14a, 14b über den zweiten Steg 30, der mit der Kurbelwelle 15 verbindbar bzw. verbunden ist und somit in dem geschlossenen Zustand der zugehörigen schaltbaren Kupplungseinrichtung 17 die Antriebsleistung an die Kurbelwelle 15 und den darauf gelagerten Presskolben 7 überträgt.

Zumindest eines der Untersetzungsgetriebe 14a, 14b der erfindungsgemäßen Getriebeanordnung 12 umfasst eine schaltbare Überlastkupplung 34, welche dazu ausgebildet ist, beim Auftreten einer mechanischen Überlast die den Schwungrädern 16 nachgeschalteten Untersetzungsgetriebe 14a, 14b bis zum Stillstand abzubremsen. In der in Fig. 3 dargestellten Ausführungsform der Getriebeanordnung 12 weist nur das Untersetzungsgetriebe 14a eine schaltbare Überlastkupplung 34 auf. Bevorzugt können beide Untersetzungsgetriebe 14a, 14b jeweils eine schaltbare Überlastkupplung 34 aufweisen. Die zumindest eine schaltbare Überlastkupplung 34 wird von der Steuerungsvorrichtung 19 angesteuert.

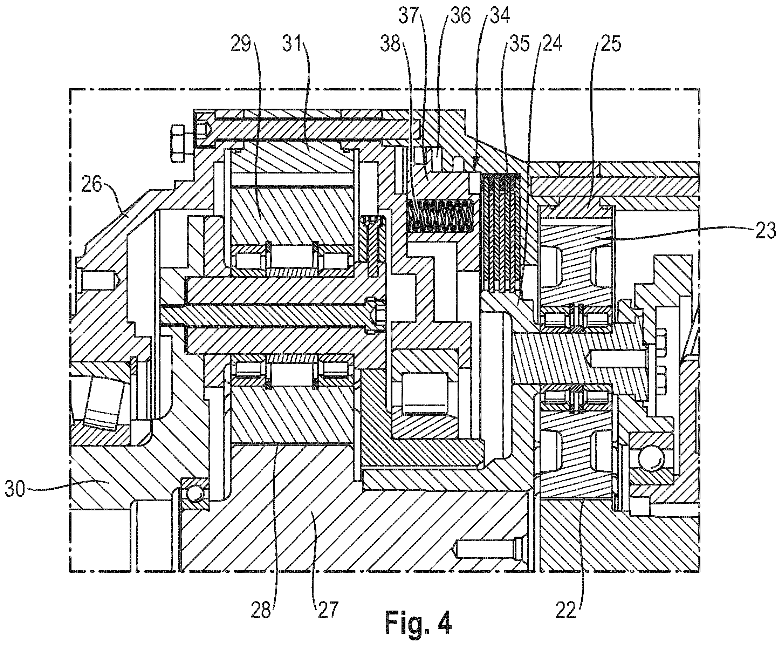

In Fig. 4 ist eine Detailansicht des Untersetzungsgetriebes 14a gemäß Fig. 3 dargestellt. Das Untersetzungsgetriebe 14a gemäß der dargestellten Ausführungsform umfasst die zumindest eine schaltbare, in das Untersetzungsgetriebe 14a integrierte Überlastkupplung 34 der Getriebeanordnung 12, welche dem Abbremsen der Untersetzungsgetriebe 14a, 14b beim Auftreten einer mechanischen Überlast dient.

Bevorzugt ist die zumindest eine schaltbare Überlastkupplung 34 als eine hydraulisch betätigbare Kupplungseinrichtung ausgeführt, vorzugsweise als eine hydraulisch betätigbare Lamellenkupplung. Die zumindest eine schaltbare Überlastkupplung 34 umfasst ein Lamellenpaket 35 welches koaxial zum ersten Steg 24 der ersten Getriebestufe auf diesem angeordnet ist. Weiterhin umfasst die zumindest eine schaltbare Überlastkupplung 34 einen Druckraum 36, welcher mit einem hydraulischen Druck beaufschlagbar ist, und einen axial verschieblichen Kolben 37, in welchem zumindest ein Federelement 38 angeordnet ist. Durch die Druckbeaufschlagung des Druckraumes 36 wird der Kolben 37 entgegen der Federkraft des zumindest einen Federelementes 38 in einer zum Lamellenpaket 35 axial beabstandeten Position gehalten. In dieser geöffneten Schaltstellung der Überlastkupplung 34 wird die Antriebsleistung somit in dem geschlossenen Zustand der schaltbaren Kupplungseinrichtung 17 ausgehend von der ersten Getriebestufe der zweiten Getriebewelle 27 des Untersetzungsgetriebes 14a zugeführt.

Zur Detektion einer mechanischen Überlast können der Getriebeanordnung 12 und/oder den Arbeitsaggregaten 5, 6, 7, 8 gemäß einer bevorzugten Weiterbildung Sensoren zur Detektion einer mechanischen Überlast zugeordnet sein. Die Sensoren können Signale an die Steuerungsvorrichtung 19 zu deren Auswertung übertragen. Die Steuerungsvorrichtung 19 ist dazu eingerichtet, anhand der Auswertung der von den Sensoren bereitgestellten Signale das Auftreten einer mechanischen Überlastung zu detektieren, um die zumindest eine Überlastkupplung 34 und/oder die Kupplungseinrichtungen 17 entsprechend anzusteuern.

Bei der Detektion einer mechanischen Überlast kann die Steuerungsvorrichtung 19 den Druckraum 36 durch Ansteuerung eines Ventilblocks drucklos schalten, so dass das zumindest ein Federelement 38 den Kolben 37 gegen das Lamellenpaket 35 presst, wodurch der Bremsvorgang eingeleitet und durchgeführt wird. Durch den Kraftschluss zwischen dem Kolben 37 und dem Lammelenpaket 35 wird die Antriebsleistung vom ersten Steg 24 auf das Getriebegehäuse 26 übertragen. Um dabei zu verhindern, dass von den Schwungrädern 16 während des Bremsvorgangs Antriebsleitung auf die Untersetzungsgetriebe 14a, 14b übertragen wird, ist die Steuerungsvorrichtung 19 dazu eingerichtet, die schaltbaren Kupplungseinrichtungen 17 gleichzeitig mit der der Überlastkupplung 34 anzusteuern, um die schaltbaren Kupplungseinrichtungen 17 aus ihrer geschlossenen Schaltstellung in ihre geöffnete Schaltstellung zu überführen.

Denkbar ist auch, die schaltbare Kupplungseinrichtung 17 und die dieser zugeordnete Überlastkupplung 34 gegeneinander zu verspannen, sodass über den stehenden Presskolben 7 die restliche Antriebsenergie abgebremst werden kann.

Weiterhin kann die Steuerungsvorrichtung 19 dazu eingerichtet sein, nach einer Detektion des Stillstands der Übersetzungsgetriebe 14a, 14b die zwischengeschalteten Kupplungseinrichtungen 17 anzusteuern, um diese durch progressives Schließen aus der geöffneten Schaltstellung in ihre geschlossene Schaltstellung zu überführen. Dies dient dazu, die Schwungräder 16, die auch bei einer Unterbrechung des Antriebsstranges 3 von der Arbeitsmaschine, aufgrund ihrer Massenträgheit weiterrotieren, aus Sicherheitsgründen ebenfalls abzubremsen.

Wie weiter oben bereits ausgeführt, können beide Untersetzungsgetriebe 14a, 14b mit jeweils einer Überlastkupplung 34 ausgeführt sein.

**Bezugszeichenliste**

| | | | |
|---|---|---|---|
| 1 | Quaderballenpresse | 29 | Zweites Planetenrad |
| 2 | Fahrgestell | 30 | Zweiter Steg |
| 3 | Antriebsstrang | 31 | Zweites Hohlrad |
| 4 | Aufnahmevorrichtung | 32 | Leistungsverzweigung |
| 5 | Schneidrotor | 33 | Seitengetriebe |
| 6 | Raffer | 34 | Überlastkupplung |
| 7 | Presskolben | 35 | Lamellenpaket |
| 8 | Knoter | 36 | Druckraum |
| 9 | Antriebswelle | 37 | Kolben |
| 10 | Leistungsverzweigung | 38 | Federelement |
| 10a | Kegelrad | | |
| 10b | Kegelrad | | |
| 11 | Abtriebswelle | | |
| 11a | Abtriebswelle | | |
| 11b | Abtriebswelle | | |
| 12 | Getriebeanordnung | | |
| 13 | Seitengetriebe | | |
| 14a | Untersetzungsgetriebe | | |
| 14b | Untersetzungsgetriebe | | |
| 15 | Kurbelwelle | | |
| 16 | Schwungrad | | |
| 17 | Schaltbare Kupplungseinrichtung | | |
| 18 | Getriebeeingang | | |
| 19 | Steuerungsvorrichtung | | |
| 20 | Abtrieb | | |
| 21 | Erste Getriebewelle | | |
| 22 | Erstes Sonnenrad | | |
| 23 | Erstes Planetenrad | | |
| 24 | Erster Steg | | |
| 25 | Erstes Hohlrad | | |
| 26 | Getriebegehäuse | | |
| 27 | Zweite Getriebewelle | | |
| 28 | Zweites Sonnenrad | | |

## Patentansprüche

1. Getriebeanordnung (12) für eine Quaderballenpresse (1), welche dazu eingerichtet ist, einen in einem Presskanal der Quaderballenpresse (1) zwischen Endlagen beweglich angeordneten Presskolben (7) sowie zumindest ein weiteres Arbeitsaggregat (5, 6, 8) der Quaderballenpresse (1) anzutreiben, **dadurch gekennzeichnet, dass** die Getriebeanordnung (12) zwei Seitengetriebe (13) und zumindest ein dem jeweiligen Seitengetriebe (13) nachgeschaltetes Untersetzungsgetriebe (14a, 14b) umfasst, welche abtriebsseitig mit einer Kurbelwelle (15), auf der der Presskolben (7) gelagert ist, verbindbar sind, wobei dem jeweiligen Seitengetriebe (13) und dem diesen nachgeschalteten Untersetzungsgetriebe (14a, 14b) zumindest ein Schwungrad (16) zwischengeschaltet ist, wobei zumindest eines der Untersetzungsgetriebe (14a, 14b) eine schaltbare Überlastkupplung (34) umfasst, welche dazu ausgebildet ist, beim Auftreten einer mechanischen Überlast die den Schwungrädern (16) nachgeschalteten Untersetzungsgetriebe (14a, 14b) bis zum Stillstand abzubremsen.

2. Getriebeanordnung (12) nach Anspruch 1, **dadurch gekennzeichnet, dass** zwischen dem jeweiligen Schwungrad (16) und dem diesem nachgeschalten Untersetzungsgetriebe (14a, 14b) zumindest eine schaltbare Kupplungseinrichtung (17) zwischengeschaltet ist, welche beim Abbremsen eine geöffnete Schaltstellung einnimmt.

3. Getriebeanordnung (12) nach Anspruch 2, **dadurch gekennzeichnet, dass** die zumindest eine schaltbare Kupplungseinrichtung (17) unmittelbar zwischen dem Schwungrad (16) und einem Getriebeeingang des dem zumindest einen Schwungrad (16) nachgeschalten Untersetzungsgetriebes (14a, 14b) angeordnet ist.

4. Getriebeanordnung (12) nach einen der Ansprüche 2 oder 3, **dadurch gekennzeichnet, dass** die zumindest eine schaltbare Kupplungseinrichtung (17) eine hydraulisch betätigbare Kupplungseinrichtung, vorzugsweise eine hydraulisch betätigbare Lamellenkupplung, ist.

5. Getriebeanordnung (12) nach einem der vorangehenden Ansprüche, **dadurch gekennzeichnet, dass** der Getriebeanordnung (12) eine Steuerungsvorrichtung (19) zugeordnet ist, welche zur Ansteuerung der zumindest einen Überlastkupplung (34) und/oder der Kupplungseinrichtungen (17) eingerichtet ist.

6. Getriebeanordnung (12) nach einem der Ansprüche 1 bis 5, **dadurch gekennzeichnet, dass** der Getriebeanordnung (12) und/oder den Arbeitsaggregaten (5, 6, 7, 8) Sensoren zur Detektion einer mechanischen Überlast zugeordnet sind.

7. Getriebeanordnung (12) nach einem der Ansprüche 1 bis 5, **dadurch gekennzeichnet, dass** die Getriebeanordnung (12) stiftförmige Scherelemente zur Detektion einer mechanischen Überlast aufweist.

8. Getriebeanordnung (12) nach einem der vorangehenden Ansprüche, **dadurch gekennzeichnet, dass** die zumindest eine Überlastkupplung (34) eine hydraulisch betätigbare Kupplungseinrichtung ist, vorzugsweise eine hydraulisch betätigbare Lamellenkupplung.

9. Getriebeanordnung (12) nach Anspruch 8, **dadurch gekennzeichnet, dass** die Überlastkupplung (34) ein Lamellenpaket (35) und einen hydraulisch druckbeaufschlagbaren Kolben (37), in welchem zumindest ein Federelement (38) angeordnet ist, umfasst, wobei der Kolben (37) durch die hydraulische Druckbeaufschlagung entgegen der Federkraft des zumindest einen Federelementes (38) in einer zum Lamellenpaket (35) beabstandeten Position gehalten wird und bei Detektion einer Überlast die Überlastkupplung (34) drucklos geschaltet wird.

10. Getriebeanordnung (12) nach einem der vorangehenden Ansprüche, **dadurch gekennzeichnet, dass** die Steuerungsvorrichtung (19) dazu eingerichtet ist, nach einer Detektion des Stillstands der Übersetzungsgetriebe (14a, 14b) die zwischengeschalteten Kupplungseinrichtungen (17) anzusteuern, um diese durch progressives Schließen aus der geöffneten Schaltstellung in ihre geschlossene Schaltstellung zu überführen.

11. Getriebeanordnung (12) nach einem der vorangehenden Ansprüche, **dadurch gekennzeichnet, dass** auf einem Abtrieb (20) des jeweiligen Seitengetriebes (13) zwei Schwungräder (16) hintereinander angeordnet sind, wobei eine weitere Kupplungseinrichtung (17) zwischen den beiden Schwungräder (16) angeordnet ist.

12. Getriebeanordnung (12) nach einem der vorangehenden Ansprüche, **dadurch gekennzeichnet, dass** die Seitengetriebe (13) als Zugmittelgetriebe, vorzugsweise als Keilriemengetriebe oder Kettengetriebe, oder als mehrstufiges Stirnradgetriebe, Kegelradstufe oder Kronenradgetriebe ausgeführt sind.

13. Getriebeanordnung (12) nach einem der vorangehenden Ansprüche, **dadurch gekennzeichnet, dass** die Untersetzungsgetriebe (14a, 14b) als Planetengetriebe oder als mehrstufige Stirnradgetriebe ausgeführt sind.

14. Getriebeanordnung (12) nach einem der vorangehenden Ansprüche, **dadurch gekennzeichnet, dass** jedes der Untersetzungsgetriebe (14a, 14b) mit einer schaltbaren Überlastkupplung (34) ausgeführt ist.

15. Quaderballenpresse (1) mit einem Antriebsstrang (3) zum Antreiben von Arbeitsaggregaten (4, 5, 6, 7, 8) der Quaderballenpresse (1), zumindest zum Antrieb eines in einem Presskanal der Quaderballenpresse (1) zwischen Endlagen beweglich angeordneten Presskolbens (7) sowie zumindest eines weiteren Arbeitsaggregats (5, 6, 8) der Quaderballenpresse (1), **dadurch gekennzeichnet, dass** der Antriebsstrang (3) eine Getriebeanordnung (12) nach einem der Ansprüche 1 bis 14 umfasst.

## Claims

1. A gear assembly (12) for a square baler (1), which is configured to drive a baler ram (7) which is movably disposed between end positions in a baling channel of the square baler (1) as well as at least one further working assembly (5, 6, 8) of the square baler (1), **characterized in that** the gear assembly (12) comprises two side gears (13) and at least one reduction gear (14a, 14b) which is connected downstream of the respective side gear (13) and the output side of which can be connected to a crankshaft (15) on which the baler ram (7) is mounted, wherein at least one flywheel (16) is interposed between the respective side gear (13) and the reduction gear (14a, 14b) connected downstream thereof, wherein at least one of the reduction gears (14a, 14b) comprises an overload clutch (34) which can be shifted, which is configured to brake the reduction gears (14a, 14b) connected downstream of the flywheels (16) to a standstill when a mechanical overload occurs.

2. The gear assembly (12) according to claim 1, **characterized in that** at least one clutch device (17) which can be shifted is interposed between the respective flywheel (16) and the reduction gear (14a, 14b) connected downstream thereof, which takes up a disengaged gear shift position when braking.

3. The gear assembly (12) according to claim 2, **characterized in that** the at least one clutch device (17) which can be shifted is disposed directly between the flywheel (16) and a gear input of the reduction gear (14a, 14b) connected downstream of the at least one flywheel (16).

4. The gear assembly (12) according to one of claims 2 or 3, **characterized in that** the at least one clutch device (17) which can be shifted is a hydraulically operable clutch device, preferably a hydraulically operable multi-plate clutch.

5. The gear assembly (12) according to one of the preceding claims, **characterized in that** a control device (19) which is configured to control the at least one overload clutch (34) and/or the clutch devices (17) is associated with the gear assembly (12).

6. The gear assembly (12) according to one of claims 1 to 5, **characterized in that** sensors for the detection of a mechanical overload are associated with the gear assembly (12) and/or the working assemblies (5, 6, 7, 8).

7. The gear assembly (12) according to one of claims 1 to 5, **characterized in that** the gear assembly (12) has pin-shaped shear elements for the detection of a mechanical overload.

8. The gear assembly (12) according to one of the preceding claims, **characterized in that** the at least one overload clutch (34) is a hydraulically operable clutch device, preferably a hydraulically operable multi-plate clutch.

9. The gear assembly (12) according to claim 8, **characterized in that** the overload clutch (34) comprises a disk pack (35) and a piston (37) to which hydraulic pressure can be applied, in which at least one spring element (38) is disposed, wherein the piston (37) is held against the spring force of the at least one spring element (38) by the applied hydraulic pressure in a position which is spaced from the disk pack (35) and when an overload is detected, the overload clutch (34) is shifted in an unpressurized manner.

10. The gear assembly (12) according to one of the preceding claims, **characterized in that** the control device (19) is configured to control the interposed clutch devices (17) after a detection of the standstill of the reduction gear (14a, 14b) in order to transfer it from the disengaged gear shift position to its engaged gear shift position by progressive closure.

11. The gear assembly (12) according to one of the preceding claims, **characterized in that** two flywheels (16) are disposed one behind the other on an output (20) of the respective side gear (13), wherein a further clutch device (17) is disposed between the two flywheels (16).

12. The gear assembly (12) according to one of the preceding claims, **characterized in that** the side gear (13) is constructed as a traction gear, preferably as a V-belt gear or chain gear, or as a multi-stage spur gear, bevel gear or crown gear.

13. The gear assembly (12) according to one of the preceding claims, **characterized in that** the reduction gear (14a, 14b) is constructed as a planetary gear or as a multi-stage spur gear.

14. The gear assembly (12) according to one of the preceding claims, **characterized in that** each of the reduction gears (14a, 14b) is constructed with an overload clutch (34) which can be shifted.

15. A square baler (1) with a drive train (3) in order to drive working assemblies (4, 5, 6, 7, 8) of the square baler (1), at least for driving a baler ram (7) which is movably disposed between end positions in a baling channel of the square baler (1) as well as at least one further working assembly (5, 6, 8) of the square baler (1), **characterized in that** the drive train (3) comprises a gear assembly (12) according to one of claims 1 to 14.

## Revendications

1. Agencement de transmission (12) destiné à une presse à balles carrées (1), qui est conçu pour entraîner un piston de pressage (7), disposé dans un canal de pressage de la presse à balles carrées (1), avec possibilité de déplacement entre des positions extrêmes, ainsi qu'au moins un autre organe de travail (5, 6, 8) de la presse à balles carrées (1), **caractérisé en ce que** l'agencement de transmission (12) comprend deux transmissions latérales (13) et au moins un mécanisme réducteur (14a, 14b) disposé à la suite de la transmission latérale (13) respective, qui peuvent être reliés côté sortie à un vilebrequin (15) sur lequel est monté le piston de pressage (7), au moins un volant d'inertie (16) étant intercalé entre la transmission latérale (13) respective et le mécanisme réducteur (14a, 14) placé à sa suite, sachant qu'au moins un des mécanismes réducteurs (14a, 14b) comprend un accouplement de surcharge (34) débrayable qui est agencé pour freiner jusqu'à l'arrêt les mécanismes réducteurs (14a, 14b) montés à la suite des volants d'inertie (16), en cas de surcharge mécanique.

2. Agencement de transmission (12) selon la revendication 1, **caractérisé en ce qu'**il est prévu entre le volant d'inertie (16) respectif et le mécanisme réducteur (14a, 14b) placé à sa suite, au moins un dispositif d'accouplement (17) débrayable qui adopte une position de commutation ouverte lors du freinage.

3. Agencement de transmission (12) selon la revendication 2, **caractérisé en ce que** le dispositif d'accouplement (17) débrayable, au nombre d'au moins un, est placé directement entre le volant d'inertie (16) et une entrée de transmission du mécanisme réducteur (14a, 14b) monté à la suite du volant d'inertie (16), au nombre d'au moins un.

4. Agencement de transmission (12) selon une des revendications 2 ou 3, **caractérisé en ce que** le dispositif d'accouplement (17) débrayable, au nombre d'au moins un, est un dispositif d'accouplement à actionnement hydraulique, de préférence un accouplement à disques multiples à actionnement hydraulique.

5. Agencement de transmission (12) selon une des revendications précédentes, **caractérisé en ce qu'**est associé à l'agencement de transmission (12), un dispositif de commande (19) qui est conçu pour activer l'accouplement de surcharge (34), au nombre d'au moins un, et/ou les dispositifs d'accouplement (17).

6. Agencement de transmission (12) selon une des revendications 1 à 5, **caractérisé en ce que** des capteurs destinés à détecter une surcharge mécanique sont associés à l'agencement de transmission (12) et/ou aux organes de travail (5, 6, 7, 8).

7. Agencement de transmission (12) selon une des revendications 1 à 5, **caractérisé en ce que** l'agencement de transmission (12) présente des éléments ciseaux en forme de tiges destinés à détecter une surcharge mécanique.

8. Agencement de transmission (12) selon une des revendications précédentes, **caractérisé en ce que** l'accouplement de surcharge (34), au nombre d'au moins un, est un dispositif d'accouplement à actionnement hydraulique, de préférence un accouplement à disques multiples à actionnement hydraulique.

9. Agencement de transmission (12) selon la revendication 8, **caractérisé en ce que** l'accouplement de surcharge (34) comprend un ensemble de disques (35) et un piston (37) pouvant être sollicité par une pression par voie hydraulique et dans lequel est disposé au moins un élément ressort (38), le piston (37) étant maintenu dans une position située à distance de l'ensemble de disques (35), par l'application d'une pression hydraulique à l'encontre de la force élastique de l'élément ressort (38), au nombre d'au moins un, et l'accouplement de surcharge (34) étant mis hors pression en cas de détection d'une surcharge.

10. Agencement de transmission (12) selon une des revendications précédentes, **caractérisé en ce que** le dispositif de commande (19) est conçu pour activer les dispositifs d'accouplement (17) intercalés, suite à une détection de l'arrêt des mécanismes de transmission (14a, 14b), aux fins d'amener les dispositifs d'accouplement par fermeture progressive de la position de commutation ouverte dans leur position de commutation fermée.

11. Agencement de transmission (12) selon une des revendications précédentes, **caractérisé en ce que** sur une sortie (20) de la transmission latérale (13) respective, deux volants d'inertie (16) sont disposés l'un à la suite de l'autre, un dispositif d'accouplement (17) supplémentaire étant placé entre les deux volants d'inertie (16).

12. Agencement de transmission (12) selon une des revendications précédentes, **caractérisé en ce que** les transmissions latérales (13) sont réalisées comme mécanismes à élément de traction, de préférence comme mécanismes à courroie trapézoïdale ou mécanismes à chaîne, ou comme engrenages droits à plusieurs étages, comme engrenages coniques ou comme engrenages à couronne dentée.

13. Agencement de transmission (12) selon une des revendications précédentes, **caractérisé en ce que** les mécanismes réducteurs (14a, 14b) sont réalisés sous forme d'engrenages planétaires ou d'engrenages droits à plusieurs étages.

14. Agencement de transmission (12) selon une des revendications précédentes, **caractérisé en ce que** chacun des mécanismes réducteurs (14a, 14b) est réalisé avec un accouplement de surcharge (34) débrayable.

15. Presse à balles carrées (1) comprenant une chaîne cinématique (3) destinée à entraîner des organes de travail (4, 5, 6, 7, 8) de la presse à balles carrées (1), au moins pour entraîner un piston de pressage (7), disposé dans un canal de pressage de la presse à balles carrées (1), avec possibilité de déplacement entre des positions extrêmes, ainsi qu'au moins un autre organe de travail (5, 6, 8) de la presse à balles carrées (1), **caractérisée en ce que** la chaîne cinématique (3) comprend un agencement de transmission (12) selon une des revendications 1 à 14.
